# EUROPEAN PATENT APPLICATION

(11) **EP 3 157 148 A1**
(43) Date of publication of application: **19.04.2017**
(21) Application number: 15739663.1
(22) Date of filing: 08.06.2015
(51) Int. Cl.: H02K 15/095

(54) **A COIL WINDING SYSTEM**

(30) Priority: 10.06.2014 BR 102014014089
(71) Applicant: SMZ Wickel- und Montagetechnik AG, 5436 Würenlos (CH)
(72) Inventor: ZIMMERMANN, Jörg, 05586-060 São Paulo, SP (BR)
(74) Representative: Strässle, Simon
(86) International application number: PCT/IB2015/000888
(87) International publication number: WO 2015/189676

(57) **Abstract**

The present invention pertains to the mechanical and electronic industry, being related to a coil winding system of stators in transformers and/or electric motors.

In this sense, the present invention refers to a coil winding system that comprises a rotational movement element of the needles and a head (4) mounted thereon, the rotational movement element of the needles comprising a movement shaft (2a), arranged so as to move the head (4) linearly and rotationally. The rotational movement element of the needles further comprises an electro-magnetic element of rotational movement of the head (4) integrated to the movement shaft (2a).

When using the system described herein, wherein an electro-magnetic rotational movement element of the needles is adapted to the movement shaft (2a), the mechanical coupling of the two movements is avoided, and the rotor gains the freedom to move radially and linearly within the magnetic field of the stator.

This results in greater flexibility and automation facility, being a system with an electronically-programmable rotation angle and not a mechanically-fixed angle as in the prior solutions, besides being quicker having reduced inertia due to the absence of mechanical coupling, greater precision because it eliminates the set of the mechanical parts, lesser wear and tear and does not require constant lubrication owing the absence of attrition and friction, in addition to lower cost and maintenance needs.

## Description

### FIELD OF THE INVENTION

The present invention pertains to the mechanical and electronic industry, being related to a coil winding system of stators in transformers and/or electric motors.

### BACKGROUND OF THE INVENTION AND STATE OF THE ART

To manufacture copper wire coils used in stators of transformers, electric motors or the like, a winding technique called needle winding is generally used.

In this technique, a copper wire is generally used, which is directed by a needle located on a head, and this needle performs a linear movement and a rotary movement.

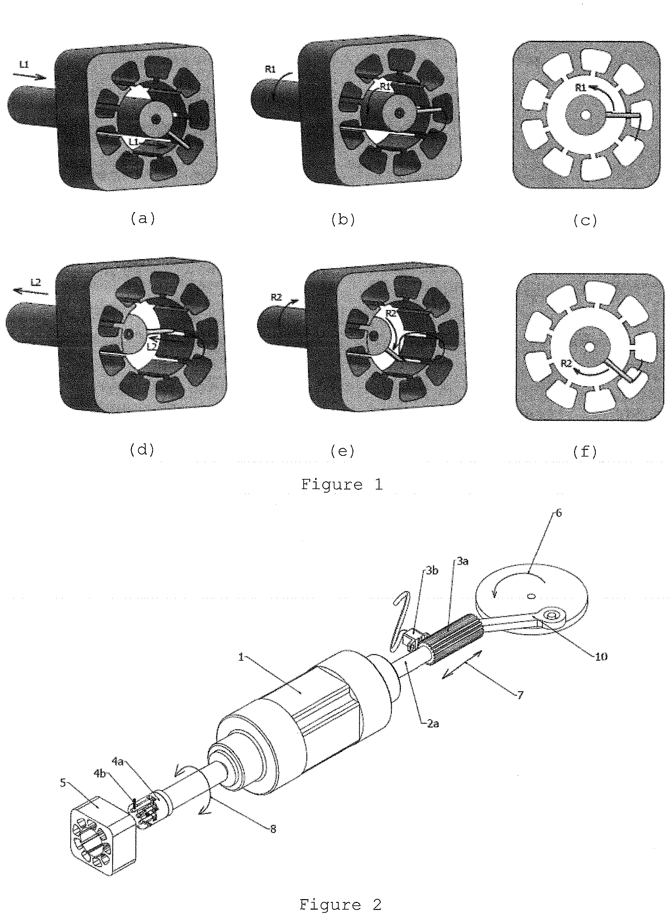

This movement can be seen in figure 1, wherein a coil winding system of copper wires makes two distinct movements in four stages for the manufacture of the stator.

The first movement, the linear movement (LI, L2), can be seen in figures 1c and 1f, whereas the second movement, the rotational movement (R1 and R2) can be seen in figures 1a, 1b, 1d and 1e.

Therefore, as illustrated in figures 1a to 1f, during the winding of a stator of a coil the system makes the first linear movement (L1), passing the wire inside the grooves of the stator, and then makes the first rotational movement (R1), effectively winding the copper wire in the rear portion of the stator groove.

After the first rotational movement (R1), a second linear movement (L2) and a second rotational movement (R2) is made, such that the needle and the wire return to the original position, for a new start of the winding movement.

After various movements, a specific quantity of copper wires will be wound in the groove, and the system will then move to perform the winding in another groove.

Obviously, this principle is used specifically in winding with needles, where the coil is wound directly in the stator groove. In this case, this movement does not depend on the quantity of grooves that is being wound at the same time, which may vary between one and "n", that is, the winding may be made in one groove alone, or up to all the grooves at the same time. Two or three needles are commonly used, facilitating the control and obtaining good winding speed.

In more modern techniques, there is also a linear movement of the needles, which does not move the entire main movement shaft of the needles, but just the needles, so that the wire can be wound around the entire length of the groove, and does not become entangled in a specific position at the end of the coiling.

In this case, this movement is generally made after the second rotational movement, which moves the needle preferably a distance identical to or slightly greater than that of the diameter of the wire and, accordingly, the wire is continuously wound and does not become entangled. Obviously, this movement distance should be the least possible, provided that it is enough for the wire to be wound continuously.

Some examples of technologies in this regard can be seen, for example, in documents EP 1 376 829, EP1 990 899, WO 2011/031711, US 2005/006518, US 5526993 and DE 102011003049, among others.

These documents describe coiling systems of stators with needles, yet all the documents cited bear certain intrinsic problems which are solved by the present invention.

Some examples of problems that can be cited are the difficulty of linear movement of the needle, the great energy required for the rotational movement of the needles, as well as the high maintenance rate required for the mechanical parts for movement, generally performed with gearings that rotate the entire fixed shaft, and the difficulty of winding thin copper wires.

In this sense, the rotational movement of the needles should occur at any time, regardless of the linear position of the movement shaft. As previously cited, to perform this independent movement, the prior techniques only present mechanical systems, such as torque shaft, toothed shaft, or polygon shaft, that enable the transfer of rotational torques whereas the shaft moves linearly.

Such solutions generate friction, be it winding or sliding friction, triggering maintenance costs and time, generating costly systems.

Therefore, as can be seen in previously cited techniques, current technology does not enable simplified, fast and precise working of winding systems of coil stators.

### BRIEF DESCRIPTION OF THE INVENTION

In light of the above, the objective of the winding system of coil stators described herein is to improve the coil winding operation, as well as to facilitate and simplify maintenance.

Thus, the present invention refers to a coil winding system that comprises a rotational movement element of the needles and a head mounted thereon, the rotational movement element of the needles comprising a movement shaft, arranged so as to move the head linearly and rotationally, wherein the rotational movement element of the needles further comprises an electro-magnetic element of rotational movement of the head integrated to the movement shaft.

Further, the electro-magnetic element of rotational movement of the head integrated to the movement shaft is, preferably, a stator of the rotary movement motor and a rotor of the rotary movement motor, wherein the rotor of the rotary movement motor comprises permanent magnets mounted internally to the movement shaft and the stator of the rotary movement motor is mounted externally to the movement shaft.

The coil winding system according to the present invention comprises a main movement shaft of the entire system, and the movement shaft is the main shaft or a continuation thereof.

In particular, the head comprises moveable needles and a linear movement element of the needles, also comprising a drive mechanism for linear movement of the moveable needles, preferably a servomotor, adapted at the end of the movement shaft.

Additionally, the head may comprise an electric motor, a toothed wheel and drawers. In this arrangement, the electric motor moves the toothed wheel, the toothed wheel moves the drawers, and the movement of the drawers creates the movement of the moveable needles in a linear direction, the movement of the moveable needles in the linear direction being uniform and identical.

Preferably, a copper wire to be wound on the coil is directed through the center of the movement shaft diverted away from the head before arriving at the head.

Lastly, the coil winding system also comprises a long toothed wheel and a measuring sensor, arranged so as to measure the rotational movement of the movement shaft.

### BRIEF DESCRIPTION OF THE DRAWINGS

Figure 1a presents a system and method commonly used for stator coiling, during a first linear movement stage.
Figure 1b presents a system and method commonly used for stator coiling, during a first rotational movement stage.
Figure 1c illustrates a system and method commonly used for stator coiling, during a first rotational movement stage.
Figure 1d illustrates a system and method commonly used for stator coiling, during a second linear movement stage.
Figure 1e illustrates a system and method commonly used for stator coiling, during a second rotational movement stage.
Figure If presents a system and method commonly used for stator coiling, during a second rotational movement stage.
Figure 2 presents a perspective view of a coil winding system according to a preferred arrangement of the present invention.
Figure 3 illustrates a perspective view of a rotational movement element of the coil winding system according to a preferred arrangement of the present invention.
Figure 4 presents a cross-sectional view of a rotational movement element of the coil winding system according to a preferred arrangement of the present invention.
Figure 5 illustrates a perspective view of a head mounted on the rotational movement element of the coil winding system according to a preferred arrangement of the present invention.
Figure 6 presents a cross-sectional view of a head mounted on the rotational movement element of the coil winding system according to a preferred arrangement of the present invention.
Figure 7 illustrates a cross-sectional view highlighting the head mounted on the rotational movement element of the head according to a preferred arrangement of the present invention.
Figure 8 presents a front view of a head according to a preferred arrangement of the present invention.
Figure 9 illustrates a perspective view of a head according to a preferred arrangement of the present invention.
Figure 10 presents a perspective view of a linear movement element of the needles of a head according to a preferred arrangement of the present invention.
Figure 11 illustrates a perspective view of a linear movement element of the needles of a head according to a preferred arrangement of the present invention highlighting the position of the copper wire.
Figure 12 presents a front view of a linear movement element of the needles of a head according to a preferred arrangement of the present invention.

### DETAILED DESCRIPTION OF THE INVENTION

Figures 1a to 1f illustrate the system and method commonly used for stator coiling. In this technique, a copper wire is generally used, which is directed by a needle located on a head, this needle performing a linear movement and a rotary movement.

Thus, a coil winding system of copper wires performs two distinct movements in four stages for the manufacture of the stator.

The first movement, the linear movement (L1, L2), can be seen in figures 1a and 1d, whereas the second movement, the rotational movement (R1 and R2) can be seen in figures 1b, 1c, 1e and If.

Therefore, as illustrated by Figures 1a to 1f, during the winding of a stator of a coil the system performs the first linear movement (L1), the wire passing inside the grooves of the stator, and then performs the first rotational movement (R1), effectively winding the copper wire on the rear portion of the stator groove.

After the first rotational movement (R1), a second linear movement (L2) and a second rotational movement (R2) are performed, such that the needle and the wire return to the original position, for a new start of the coiling movement.

After various movements, a specific quantity of copper wires will be wound in the groove, and the system will then move in order to perform the winding in another groove.

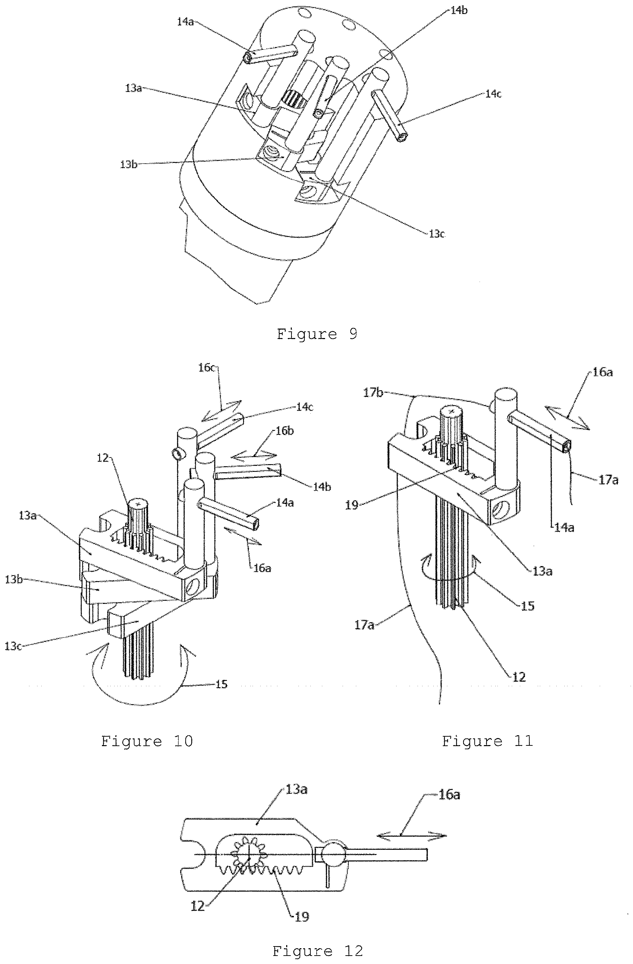

In this sense, figures 2 to 11 illustrate a winding system of coil stators according to a preferred arrangement of the present invention.

As can be seen in figure 2, in a preferred arrangement of the present invention the winding system of coil stators (5) comprises a head (4), which comprises moveable needles (4b) and a linear movement element of the needles (4a), besides a rotational movement element of the needles, which comprises a stator of the rotary movement motor (1), and a rotor of the rotary movement motor (2b), besides a movement shaft (2a).

Preferably, it is provided that the main movement shaft of the proposed system be the movement shaft (2a), or a continuation thereof, and that the system comprise part of the rotational movement element of the needles internally to the main shaft and part externally to the main shaft.

Put otherwise, preferably, the rotor magnets of the rotary movement motor (2b) are located internally to the main rotation shaft of the coil winding system and the stator is located in the part outside the main shaft. Therefore, there is provided an electro-magnetic element for rotational movement of the head (4) integrated to the main movement shaft of the coil winding system, thereby dispensing with the use of mechanical elements for the rotational movement, decreasing (or even fully eliminating) the friction at these points.

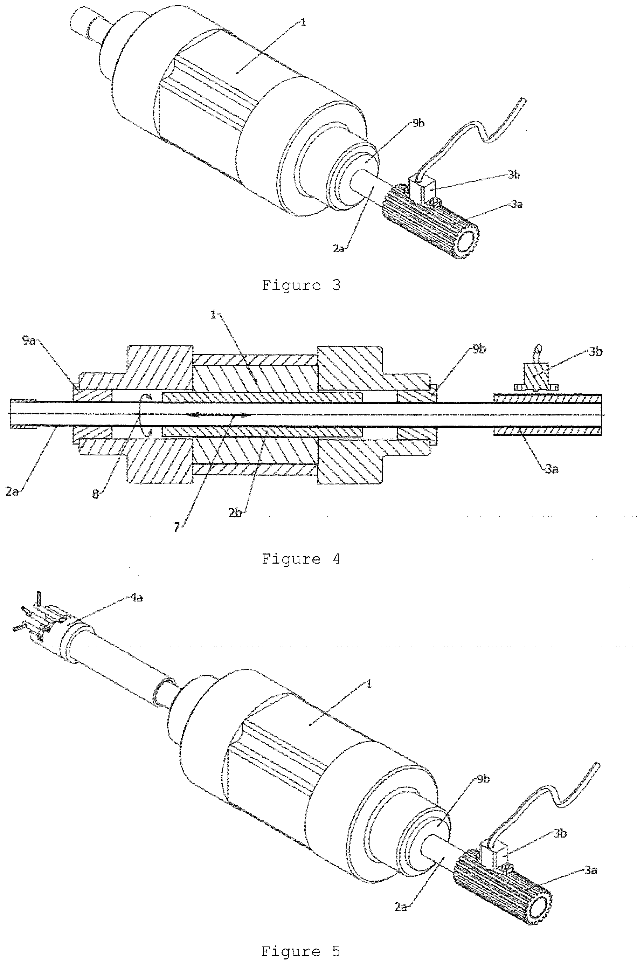

Further, as can be seen in figures 3 to 6, the rotational movement element of the needles preferably also contains a rotational position measurement system that comprises a long toothed wheel (3a) and a measuring sensor (3b). In this arrangement, the long toothed wheel (3a) and the measuring sensor (3b) are arranged so as to measure the rotational movement of the needles.

Preferably, the long toothed wheel (3a) is fixed on the movement shaft (2a), which move together. The measuring sensor (3b) does not move and, therefore, is arranged so as to measure the rotation of the teeth of the toothed wheel (3a) regardless of the linear position of the entire system.

Accordingly, the long toothed wheel (3a) must have a minimum length wherein, in the two positions, after the first linear movement (L1) and after the second linear movement (L2), the measuring sensor (3b) is capable of detecting the position of the long toothed wheel (3a).

The system may further comprise guides (9a, 9b) to guide the main shaft, enabling the rotational movement element of the needles to move linearly and rotationally.

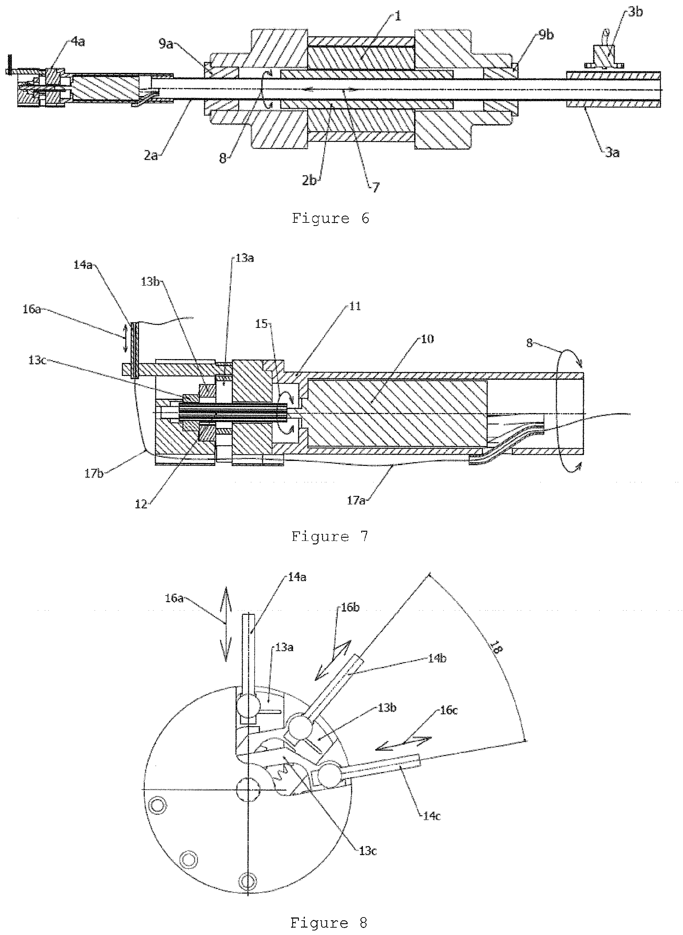

Figures 3 and 4 illustrate the rotational movement element of the needles according to such arrangement, whereas figures 5 and 6 illustrate the position of the head (4) on the rotational movement element of the needles.

Figures 7 to 9, in turn, show the movement of the copper wire (17a) on the head (4) as previously explained, as well as the head elements (4), which move the moveable needles (4b).

The function of the coiling head (4) is to distribute the copper wire (17a) uniformly in the grooves of the stator (5) which is being manufactured, thereby preventing the copper wire (17a) from being entangled in a single position of the groove. Accordingly, there is provided in a preferred arrangement of the present invention an electric motor (10), which moves a toothed wheel (12), which in turn moves the drawers (13a, 13b, 13c) with its teeth (19). This movement of the drawers (13a, 13b, 13c) creates the movement of the needles (14a, 14b, 14c) in a linear direction (16a, 16b, 16c). Obviously, in this case, it is provided that the movement of the needles (14a, 14b, 14c) in the linear direction (16a, 16b, 16c) be uniform and identical.

Here, it is emphasized that those skilled in the art will obviously envisage that various alterations and modifications can be made to the movement elements without said alterations straying from the scope of the invention, though this specific arrangement enables the mechanism to be simplified, creating a movement element with just two moveable parts, the toothed wheel (12) and the drawers (13a, 13b, 13c).

Therefore, it is also possible to simplify the guide of the drawers (13a, 13b, 13c) and use the drawers (13a, 13b, 13c) themselves as lower and upper guide, that is, one drawer (13a, 13b, 13c) slides over the other without any fixed element between them.

It is also provided herein that the copper wire (17a) be directed through the center of the main shaft and, before arriving at the head (4), be diverted away from the head (4), and not pass through the center thereof, as can be seen in figure 7.

Using said embodiment, the diversion of the copper wire to the moveable needles (2b) at ninety degrees results in much more space for movement, and the direction radius of the copper wire may be much greater. This reduces the strength that is required for this diversion, decreasing the stretching of the copper wire being wound, and thereby reducing the increase in ohm resistance of the motor winding during coiling.

Further, the copper wire (17a) away from the center enables the use of distinct rotational movement drive mechanisms. It is thus possible to use an electronically-commanded electric motor, for example, a servomotor, which is mounted inside the head that is moved in conjunction with the head, and when rotated moves the moveable needles (4b) linearly.

Accordingly, the drive does not need to be dissociated from the movements of the main shaft and a simple mechanism can be used to move the moveable needles (4b). This also enables a modification to the construction of the head (4), and these various distinctive head (4) constructions can be easily adapted to the drive mechanism of the linear movement of the moveable needles (4b) for the manufacture of the coils.

Moreover, although a preferred descriptive example was used - comprising three drawers (13a, 13b, 13c) and three needles (14a, 14b, 14c) - the quantity of drawers (13a, 13b, 13c) and needles (14a, 14b, 14c) may vary from one up to the number of grooves to be manufactured, and the angle (18) between the needles (14a, 14b, 14c) may vary from one up to one hundred and eighty degrees, being limited solely by the thickness of the grooves (minimum angle) and distance between the grooves (maximum angle). Obviously, the heads (4) containing such needles can be mass manufactured, or be constructed specifically for the construction of a special stator (5), given that it can be easily modified.

Thus, the coil winding system comprises a rotational movement element of the needles and a head (4) mounted thereon, the rotational movement element of the needles comprising a movement shaft (2a), arranged so as to move the head (4) linearly and rotationally. The rotational movement element of the needles further comprises an electro-magnetic rotational movement element of the head (4) integrated to the movement shaft (2a).

Preferably, the electro-magnetic rotational movement element of the head (4) integrated to the movement shaft (2a) is a stator of the rotary movement motor (1) and a rotor of the rotary movement motor (2b), and the rotor of the rotary movement motor (2b) comprises permanent magnets mounted internally to the movement shaft (2a) and the stator of the rotary movement motor (1) is mounted externally to the movement shaft (2a).

Further, in a preferred arrangement of the present invention the movement shaft (2a) is a main movement shaft of the coil winding system or a continuation thereof.

In particular, the head (4) comprises moveable needles (4b) and a linear movement element of the needles (4a), besides a drive mechanism for linear movement of the moveable needles (4b). The drive mechanism for linear movement of the moveable needles (4b) is, preferably, a servomotor adapted at the end of the movement shaft (2a).

Additionally, the head (4) comprises an electric motor (10), a toothed wheel (12) and drawers (13a, 13b, 13c). In this arrangement, the electric motor (10) moves the toothed wheel (12), the toothed wheel (12) moves the drawers (13a, 13b, 13c), and the movement of the drawers (13a, 13b, 13c) creates the movement of the moveable needles (4a, 14a, 14b, 14c) in a linear direction (16a, 16b, 16c), the movement of the moveable needles (4b, 14a, 14b, 14c) being in the linear direction (16a, 16b, 16c) uniform and identical.

Preferably, the copper wire (17a) to be wound around the coil is directed through the center of the movement shaft (2a) diverted away from the head (4) before arriving at the head (4), and the coil winding system also comprises a long toothed wheel (3a) and a measuring sensor (3b), arranged so as to measure the rotational movement of the movement shaft (2a).

In light of the above, the coil stator winding system comprises three distinct movements to manufacture the coil stator, a linear movement of the main shaft (7), a rotational movement of the needles (8), and a movement in a linear direction (16a, 16b, 16c) of the moveable needles (14a, 14b, 14c).

The linear movement of the main shaft (7) may be performed by various principles, and an example that can be cited is a crankshaft, which performs a rotational movement (6) that is transformed into the linear movement of the main shaft (7). Other non-exclusive examples that can be cited are cams, electric motors, with slanted spindle or disc, stepper motors, among others. Preferably, it is provided that the main shaft be the movement shaft (2a), or a continuation thereof after the linear movement element.

The rotational movement of the needles (8) may and should occur at any time, regardless of the linear position of the movement shaft (2a). As previously explained, to carry out this independent movement, the prior techniques only present mechanical systems, such as torque shaft, toothed shaft, or polygon shaft, which enable the transfer of rotational torques whereas the shaft moves linearly. These solutions generate friction, be it winding or sliding friction, that triggers maintenance costs and time, generating costly systems.

When using the system described herein, wherein an electro-magnetic rotational movement element of the needles is adapted to the main shaft, this mechanical coupling of the two movements is avoided, and the rotor gains the freedom to move radially and linearly within the magnetic field of the stator.

This results in greater flexibility and automation facility, being a system with an electronically-programmable rotation angle and not a mechanically-fixed angle as in the prior solutions, besides being quicker having reduced inertia due to the absence of mechanical coupling, greater precision because it eliminates the set of the mechanical parts, lesser wear and tear and does not require constant lubrication owing the absence of attrition and friction, in addition to lower cost and maintenance needs.

Although the invention has been broadly described, it will be obvious for those skilled in the art that various alterations and modifications can be introduced without said alterations straying from the scope of the invention.

## Claims

1. A coil winding system, **CHARACTERIZED by** comprising a rotational movement element of the needles and a head (4) mounted thereon, the rotational movement element of the needles comprising a movement shaft (2a), arranged so as to move the head (4) linearly and rotationally, wherein the rotational movement element of the needles further comprises an electro-magnetic element of rotational movement of the head (4) integrated to the movement shaft (2a) .

2. The coil winding system, as claimed in claim 1, **CHARACTERIZED in that** the electro-magnetic rotational movement element of the head (4) integrated to the movement shaft (2a) is a stator of the rotary movement motor (1) and a rotor of the rotary movement motor (2b).

3. The coil winding system, as claimed in claim 2, **CHARACTERIZED in that** the rotor of the rotary movement motor (2b) comprises permanent magnets mounted internally to the movement shaft (2a).

4. The coil winding system, as claimed in claim 2 or 3, **CHARACTERIZED in that** the stator of the rotary movement motor (1) is mounted externally to the movement shaft (2a).

5. The coil winding system, as claimed in any one of claims 1 to 4, **CHARACTERIZED in that** the movement shaft (2a) is a main movement shaft of the coil winding system or a continuation thereof.

6. The coil winding system, as claimed in any one of claims 1 to 5, **CHARACTERIZED in that** the head (4) comprises moveable needles (4b) and a linear movement element of the needles (4a).

7. The coil winding system, as claimed in claim 6, **CHARACTERIZED by** comprising a drive mechanism for linear movement of the moveable needles (4b).

8. The coil winding system, as claimed in claim 7, **CHARACTERIZED in that** the drive mechanism for linear movement of the moveable needles (4b) is a servomotor adapted at the end of the movement shaft (2a).

9. The coil winding system, as claimed in any one of claims 1 to 8, **CHARACTERIZED by** further comprising a long toothed wheel (3a) and a measuring sensor (3b), arranged so as to measure the rotational movement of the movement shaft (2a) .

10. The coil winding system, as claimed in any one of claims 1 to 9, **CHARACTERIZED in that** the head (4) comprises an electric motor (10), a toothed wheel (12) and drawers (13a, 13b, 13c), wherein the electric motor (10) moves the toothed wheel (12), the toothed wheel (12) moves the drawers (13a, 13b, 13c), and the movement of the drawers (13a, 13b, 13c) creates the movement of the moveable needles (4a, 14a, 14b, 14c) in a linear direction (16a, 16b, 16c).

11. The coil winding system, as claimed in claim 10, **CHARACTERIZED in that** the movement of the moveable needles (4b, 14a, 14b, 14c) in the linear direction (16a, 16b, 16c) is uniform and identical.

12. The coil winding system, as claimed in any one of claims 1 to 11, **CHARACTERIZED by** comprising a copper wire (17a) to be wound around the coil, wherein the copper wire (17a) is directed through the center of the movement shaft (2a) diverted away from the head (4) before arriving at the head (4).
